(19) Europäisches Patentamt
European Patent Office
Office européen des brevets

(11) **EP 4 343 619 A1**

(12) **EUROPEAN PATENT APPLICATION**

(43) Date of publication:
**27.03.2024 Bulletin 2024/13**

(51) International Patent Classification (IPC):
**G06N 3/02** *(2006.01)*

(21) Application number: **22196961.1**

(52) Cooperative Patent Classification (CPC):
**G06N 3/0985; G06N 3/02; G06N 20/00**

(22) Date of filing: **21.09.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
- **Yang, Bin**
  **Stuttgart (DE)**
- **Cakaj, Rinor**
  **70469 Stuttgart (DE)**
- **Mehnert, Jens Eric Markus**
  **71272 Malmsheim (DE)**

(54) **METHOD FOR REGULARIZING A NEURAL NETWORK**

(57)     Computer-implemented method for determining an output signal ($y$) characterizing a classification and/or regression result and/or density value of an input signal ($x$) or characterizing an action to be performed based on the input signal ($x$), wherein the output signal ($y$) is determined by providing the input signal ($x$) to a machine learning system (60), preferably a neural network, wherein a value of at least one parameter ($v_1$, $v_2$, $v_n$) of the machine learning system (60) is transformed by a reparameterization function (rf) before using the parameter in the machine learning system (60), wherein the reparameterization function (rf) is characterized by being bound from below and above and by having a largest gradient at zero.

**Fig. 1**

EP 4 343 619 A1

## Description

Technical field

The invention concerns a computer implemented method for determining output signals from input signals by means of a machine learning system, a method for training a machine learning system, a training system, a computer program, and a computer-readable storage medium.

Prior art

Salimans & Kingma, 2016, "Weight Normalization: A Simple Reparameterization to Accelerate Training of Deep Neural Networks", https://arxiv.org/pdf/1602.07868.pdf, discloses a method for reparametrizing weight of a neural network.

Schwarz et al., 2021, "Powerpropagation: A sparsity inducing weight reparameterization", https://arxiv.org/pdf/2110.00296.pdf, discloses another method for reparametrizing weights of a neural network.

Technical background

Machine learning models are used as backbone for a plurality of technical applications.

A major problem of machine learning systems is overfitting, e.g., due to limited size of training data, high capacity of the machine learning system in terms of parameters, and noise in the input data. Overfitting describes the phenomenon where a machine learning system (almost) perfectly fits the training data while achieving poor performance on data other than the training data. Overfitting in general leads to poor generalization capabilities of the machine learning model.

Whether a machine learning system has overfit to its training data can be assessed by means of the parameters (also referred to as weights) of the machine learning model. The inventors made the observation that large parameter values are indicative of the machine learning system to have overfit to its training data. Similarly, the inventors made the observation that regularized machine learning system have a greater range of weights around zero with fewer centered at zero.

The advantage of the method with features of the independent claim 1 is that an output signal may be obtained from a machine learning system, which is regularized by means of reparametrizing its weights. This leads to the machine learning system being robust against overfitting and in turn to a more accurate prediction of the output signal.

Disclosure of the invention

In a first aspect, the invention concerns a computer-implemented method for determining an output signal characterizing a classification and/or regression result and/or density value of an input signal or characterizing an action to be performed based on the input signal, wherein the output signal is determined by providing the input signal to a machine learning system, preferably a neural network, wherein a value of at least one parameter of the machine learning system is transformed by a reparameterization function before using the parameter in the machine learning system, wherein the reparameterization function is characterized by being bound from below and above and by having a largest gradient at zero.

The parameters of the machine learning system may be understood as defining its input-output-behavior. An input signal or an intermediate representation depending on the input signal is processed by the parameters when determining the output signal based on the input signal provided to the machine learning system. The concrete values of the parameters of the machine learning system are typically tuned to training data. Different embodiments of the machine learning system may comprise different parameters. For example, for neural networks, the weights of the respective layers are understood as parameters of the neural network. For a support vector machine, the vector of the separating hyperplane and the bias may be understood as parameters.

The output signal determined from the machine learning system characterizes a classification and/or a regression result and/or a density value and/or an action to be performed. If the output signal characterizes a density value, this may be understood as the machine learning system determining a likelihood or density value of the input signal with respect to training data the machine learning system has been trained with. If the output signal characterizes an action to be performed, this may be understood as the machine learning system being used for reinforcement learning.

The machine learning system may be understood as a data-processing apparatus or data-processing device.

Advantageously, the value of at least one of the parameters of the machine learning system is processed by the reparameterization function before being used. This can be understood as follows: In every operation of the machine learning system that would usually involve the parameter, the value of the parameter is first transformed by the reparameterization function and the transformed value is then used as value of the parameter. This application of the reparameterization function can be applied during inference anytime the parameter would be accessed (i.e., during every forward pass of a neural network). As the reparameterization function is bound from below and above and has a largest gradient at zero, the value of the parameter after reparameterization is also bound and is encouraged to be away from zero. Especially when reparametrizing a plurality of parameters of the machine learning system, this has the advantageous effect of reducing large values of the parameters or values close to zero. Consequently, the method reduces overfitting as well as sensitivity of the machine learning system to noise in the input signal.

While values of parameters suitable for being subject to reparameterization can be obtained from various sources such as online download or ordering a machine learning service entity for determining such parameters, a preferred way of determining the values of the parameters is by training the machine learning system based on training data.

Hence, in another aspect the invention concerns a computer-implemented method for training a machine learning system, preferably a neural network, based on training input signals, wherein during training a value of at least one parameter of the machine learning system is transformed by a reparameterization function before using the parameter in the machine learning system, wherein the reparameterization function is characterized by being bound from below and above and by having a largest gradient at zero.

Depending on the machine learning system, training may be conducted as supervised training (e.g., if the output signal characterizes a classification and/or regression result), unsupervised training (e.g., if the output signal characterizes a density), or under a reinforcement learning paradigm (e.g., if the output signal characterizes an action).

Advantageously, this allows for determining values for the parameters which are suitable for application of the reparameterization function, i.e., the reparametrized value or reparametrized values are suitable for predicting an accurate output signal. During training, the values of the parameters of the machine learning system are hence adapted to solve the training goal (e.g., supervised training, unsupervised training, reinforcement learning), while also being adapted to reduce overfitting and sensitivity to noise in the input signal.

While the machine learning system could be used in the method of the first aspect of the invention after training, the value of the at least one parameter of the machine learning system is preferably set to a value that is obtained when processing the parameter with the reparameterization function.

In other words, all parameters of the machine learning system that would otherwise be reparametrized during inference can preferably be reparametrized once after training and the reparametrized parameters may be stored in the machine learning system as parameters. This advantageously reduces a runtime of the machine learning system during inference as reparameterization does not need to be performed on the fly anymore. In this case, the machine learning system does not need to evaluate the reparameterization function during inference but may simply use the parameters as obtained after the single run of reparameterization.

The reparameterization function may be expressed as a formula

$$w = \mathrm{rf}(v),$$

wherein $v$ is the value of the parameter before reparameterization, w is the value of the parameter after reparameterization and rf is the reparameterization function.

In preferred embodiments of the different aspects of this invention, the reparameterization function is a sigmoidal function.

Sigmoidal functions have the characteristic of being bound from below and above and having a largest gradient at zero (considering the function to not be offset along the axis of input). Suitable reparameterization functions from the family of sigmoidal functions comprise:

- Logistic functions,
- Hyperbolic tangent functions,
- Arctangent functions,
- Gudermannian functions,
- Error functions,
- Generalized logistic functions,
- Smoothstep functions, and
- Algebraic functions of the form

$$\mathrm{rf}(v) = \frac{v}{(1 + |v|^k)^{\frac{1}{k}}},$$

wherein k is a real value.

Even more preferably, the reparameterization function may be characterized by the formula

$$w = a \cdot \mathrm{rf}\left(\frac{v}{b}\right),$$

wherein, and $a$ and $b$ are hyperparameters of the machine learning system or parameters that can be adapted during training of the machine learning system.

Advantageously, this allows for adapting the reparameterization function to data that the machine learning system is faced with during training and/or inference. The inventors found that adapting $a$ and $b$ to the specific training data and/or inference data allows for increasing the performance of the machine learning system even further.

For some embodiments, it may be even more advantageous to use $a$ and $b$ as parameters of the machine learning system, i.e., parameters that can be adapted as part of training the machine learning system.

In preferred embodiments, a plurality of parameters of the machine learning system are processed by the reparameterization function before being used as parameters, wherein each parameter of the plurality of parameters uses the same values $a$ and $b$ as hyperparameters or as trainable parameters.

Sharing the parameters or hyperparameters $a$ and $b$ between a plurality of parameters leads to a decrease in the total number of parameters or hyperparameters and may hence contribute even further to mitigating overfitting (in case of *a* and *b* being parameters) or reduce the necessity for optimizing hyperparameters (in case of *a* and *b* being hyperparameters).

In some embodiments the input signal may be a sensor signal obtained by a sensor, e.g., a camera, a lidar, a radar, an ultrasonic sensor, a thermal sensor, a microphone, a piezo sensor, or a hall sensor. In these embodiments, the machine learning system may be understood as being configured for analyzing a sensor signal and determining an output characterizing a semantic content of the sensor signal. In other words, the machine learning system may extract information from the sensor signal that are not present at face value in the sensor signal but are encoded in its values.

In some embodiments an actuator or a display may be controlled based on the output signal.

Embodiments of the invention will be discussed with reference to the following figures in more detail. The figures show:

Figure 1      a machine learning system;
Figure 2      a training system for training the machine learning system;
Figure 3      a control system comprising the machine learning system controlling an actuator in its environment;
Figure 4      the control system controlling an at least partially autonomous robot;
Figure 5      the control system controlling a manufacturing machine;
Figure 6      the control system controlling an automated personal assistant;
Figure 7      the control system controlling an access control system;
Figure 8      the control system controlling a surveillance system;
Figure 9      the control system controlling an imaging system;
Figure 10    the control system controlling a medical analysis system.

Description of the embodiments

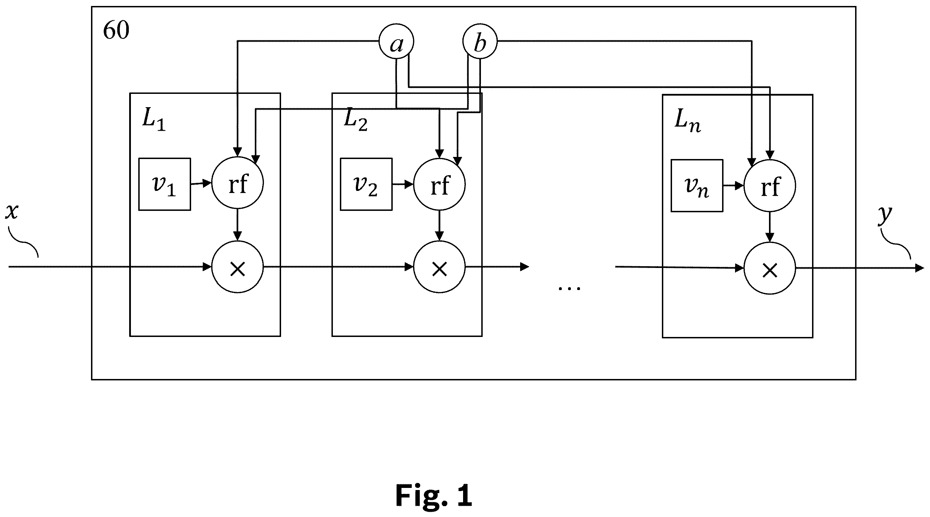

Figure 1 shows a machine learning system (60) configured for reparametrizing its parameters by means of a reparameterization function (rf) during inference. In the embodiment, the machine learning system (60) is a neural network comprising a plurality of layers ($L_1$, $L_2$, $L_n$). The layers of at least a subset of the layers ($L_1$, $L_2$, $L_n$) comprises parameters, which are used for processing an input. The subset may, for example, comprise convolutional layers or fully connected layers. For convolutional layers, an input of a respective layer is convolved ($\times$) with parameters in order to determine an output of the layer, wherein the values of the parameters are obtained as a result from applying the reparameterization function (rf) to original values ($v_1$, $v_2$, $v_n$) of the parameters. For fully connected layers, an input of a respective layer is

multiplied ($\times$) with a matrix in order to determine an output of the layer, wherein the matrix comprises values of the parameters after reparameterization with the reparameterization function (rf).

In the embodiment, the reparameterization function (rf) is a hyperbolic function characterized by the formula

$$w = a \cdot \tanh\left(\frac{v}{b}\right),$$

wherein w is a value of a parameter after reparameterization and *v* is a value of the parameter before reparameterization. In further embodiments, the reparameterization function may be given by another function, especially a sigmoidal function. In the embodiment *a* and *b* are hyperparameters of the machine learning system (60), wherein the concrete values are preferably determined by means of a grid search. In other embodiments, *a* and *b* may be parameters of the machine learning system (60), which are optimized during a training of the machine learning system (60).

In the embodiment, *a* and *b* are further shared between the different layers ($L_1$, $L_2$, $L_n$). In other embodiments, each layer ($L_1$, $L_2$, $L_n$) may comprise individual values *a* and *b* for their respective reparameterization function (rf).

The machine learning system (60) is provided an input signal (x), which is forwarded through the layers ($L_1$, $L_2$, $L_n$) of the machine learning system (60). An output of a last layer ($L_n$) is provided as output signal (y) of the machine learning system (60).

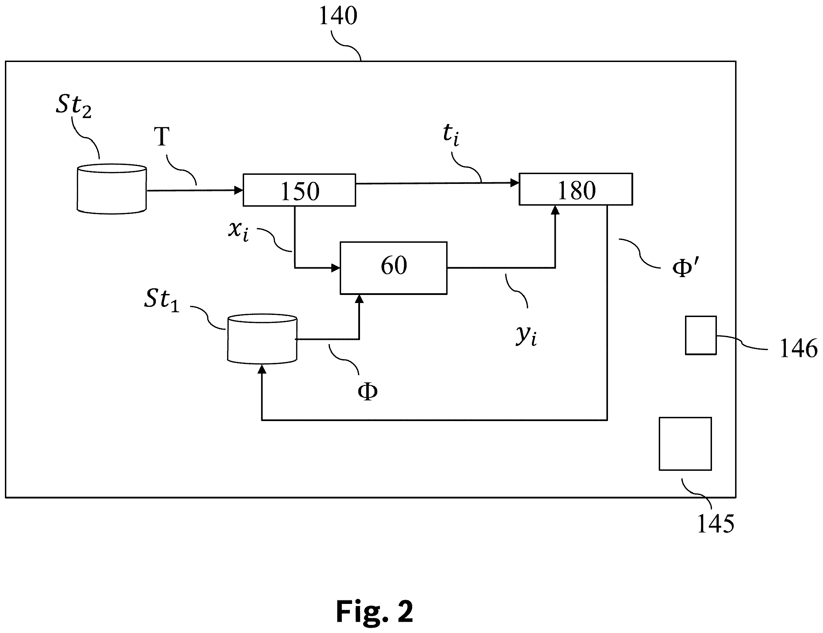

Figure 2 shows an embodiment of a training system (140) configured for training the machine learning system (60) by means of a training data set (T). The training data set (T) comprises a plurality of input signals ($x_i$) which are used for training the machine learning system (60), wherein the training data set (T) further comprises, for each input signal ($x_i$), a desired output signal ($t_i$) which corresponds to the input signal ($x_i$) and characterizes a classification of the input signal ($x_i$).

For training, a training data unit (150) accesses a computer-implemented database ($St_2$), the database ($St_2$) providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the machine learning system (60). The machine learning system (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters (Φ') for the machine learning system (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the machine learning system (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the machine learning system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

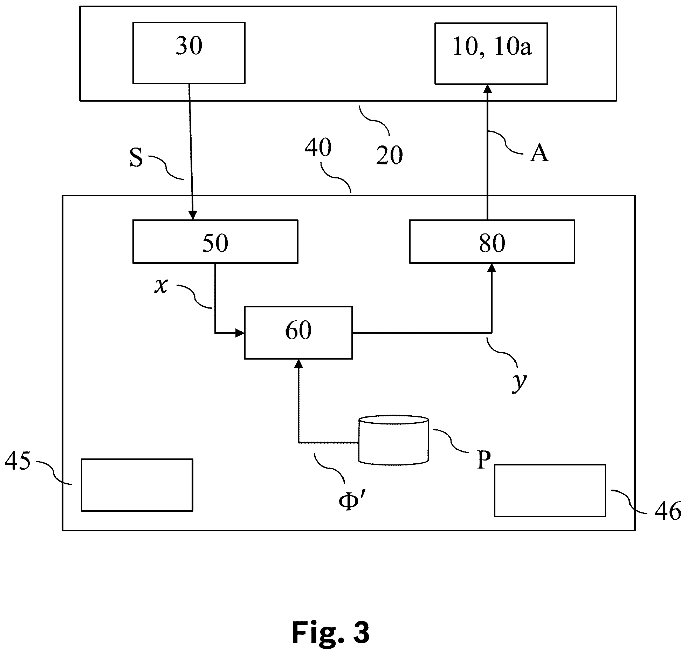

Figure 3 shows an embodiment of a control system (40) using the machine learning system (60) to determine a control signal (A) of an actuator (10). The actuator (10) and its environment (20) will be jointly called actuator system. At preferably evenly spaced points in time, a sensor (30) senses a condition of the actuator system. The sensor (30) may comprise several sensors.

Preferably, the sensor (30) is an optical sensor that takes images of the environment (20). An output signal (S) of the sensor (30) (or in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal *(x)*. In other words, the input signal (x) is provided in accordance with the sensor signal (S).

The input signal (x) is then passed on to a machine learning system (60).

The machine learning system (60) is parametrized by parameters ($\Phi$), which are stored in and provided by a parameter storage ($St_1$).

The machine learning system (60) determines an output signal (y) from the input signals (x). The output signal (y) comprises information that assigns one or more labels to the input signal (x). The output signal (y) is transmitted to an optional conversion unit (80), which converts the output signal (y) into the control signals (A). The control signals (A) are then transmitted to the actuator (10) for controlling the actuator (10) accordingly. Alternatively, the output signal (y) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

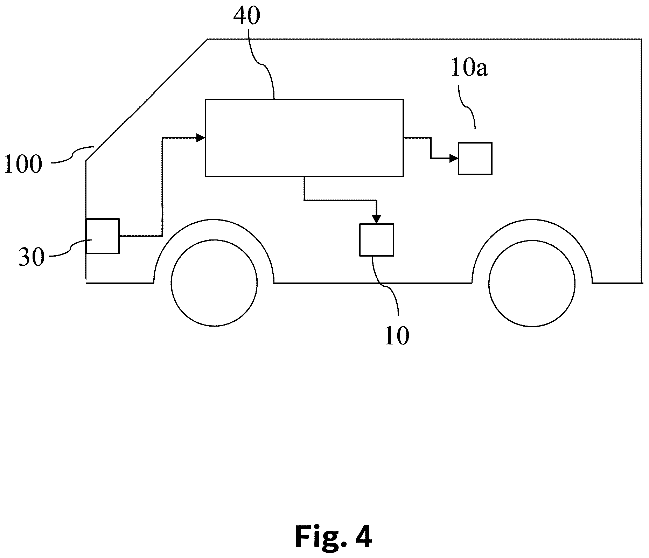

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (x) may hence be understood as an input image and the machine learning system (60) as an image classifier.

The machine learning system (60) may be configured to detect objects in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the machine learning system (60) deems them most likely to be, e.g., pedestrians or trees, and the control signal (A) may be determined depending on the classification.

Alternatively or additionally, the control signal (A) may also be used to control the display (10a), e.g., for displaying the objects detected by the machine learning system (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

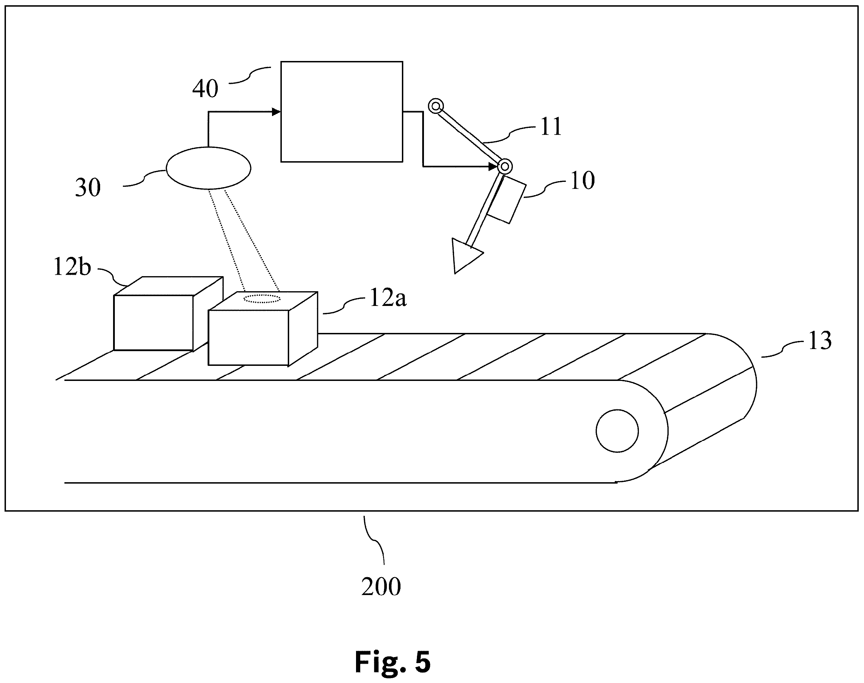

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The machine learning system (60) may hence be understood as an image classifier.

The machine learning system (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the machine learning system (60) classifies, whether the manufactured product is broken or exhibits a defect. The actuator (10) may then be controlled as to remove the manufactured product from the transportation device.

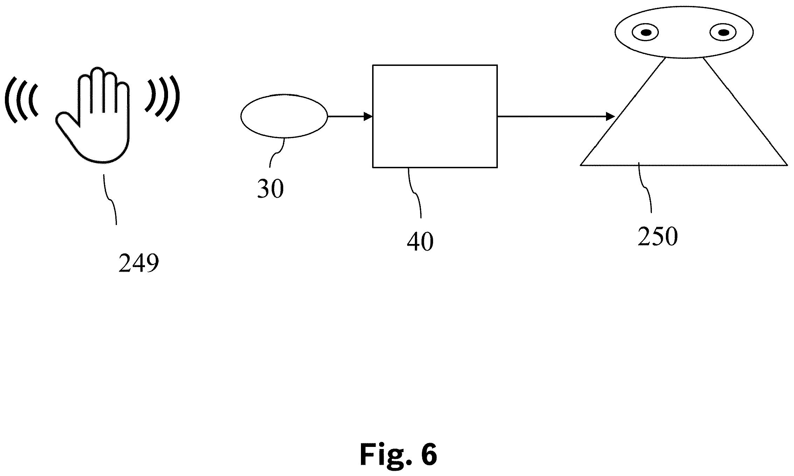

Figure 6 shows an embodiment in which the control system (40) is used for controlling an automated personal assistant (250). The sensor (30) may be an optical sensor, e.g., for receiving video images of a gesture of a user (249). Alternatively, the sensor (30) may also be an audio sensor, e.g., at least one microphone for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the machine learning system (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the machine learning system (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave or a dishwasher.

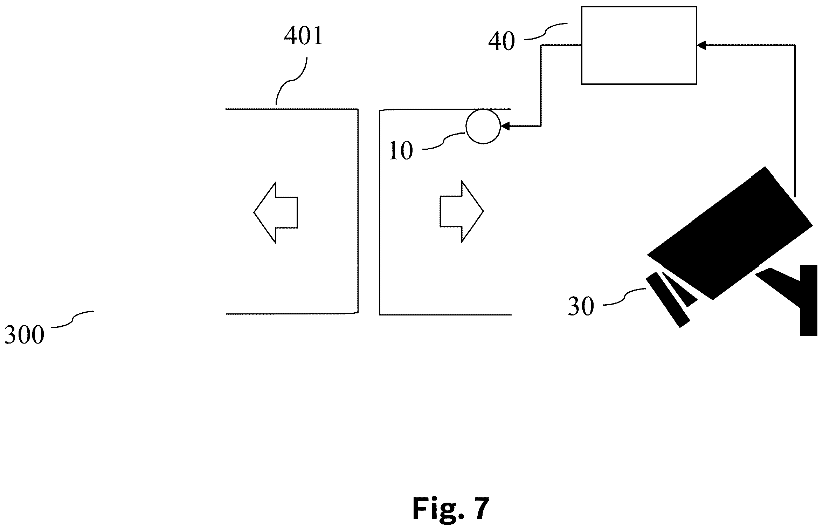

Figure 7 shows an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face. The machine learning system (60) may hence be understood as an image classifier.

The machine learning system (60) may be configured to classify an identity of the person, e.g., by matching the detected face of the person with other faces of known persons stored in a database, thereby determining an identity of the person. The control signal (A) may then be determined depending on the classification of the machine learning system (60), e.g., in accordance with the determined identity. The actuator (10) may be a lock which opens or closes the door depending on the control signal (A). Alternatively, the access control system (300) may be a non-physical, logical access control system. In this case, the control signal may be used to control the display (10a) to show information about the person's identity and/or whether the person is to be given access.

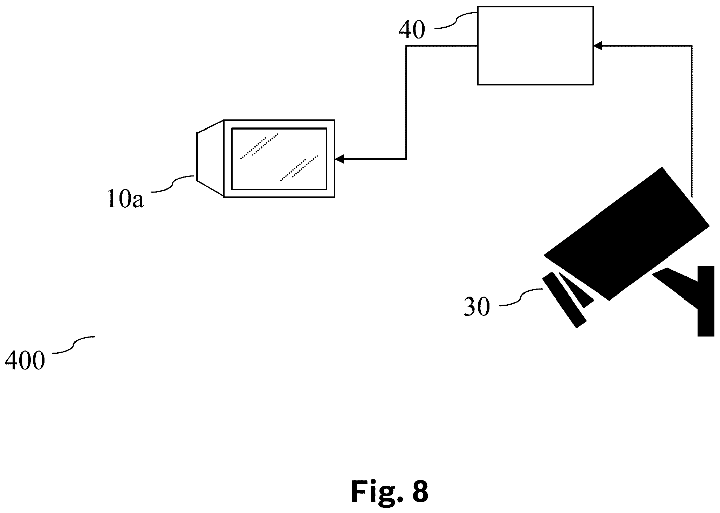

Figure 8 shows an embodiment in which the control system (40) controls a surveillance system (400). This embodiment is largely identical to the embodiment shown in figure 7. Therefore, only the differing aspects will be described in detail. The sensor (30) is configured to detect a scene that is under surveillance. The control system (40) does not necessarily control an actuator (10) but may alternatively control a display (10a). For example, the machine learning system (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the machine learning system (60).

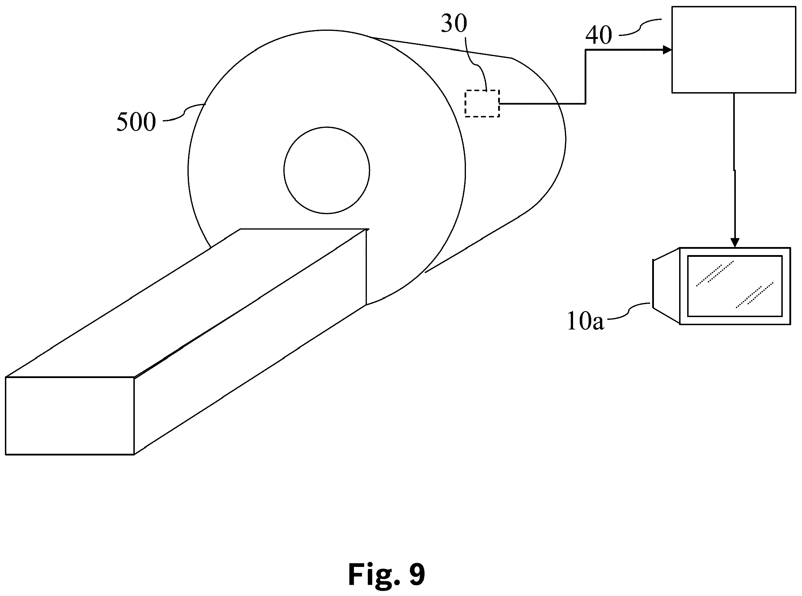

Figure 9 shows an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The machine learning system (60) may then determine a classification of at least a part of the sensed image. The at least part of the image is hence used as input image (x) to the machine learning system (60). The machine learning system (60) may hence be understood as an image classifier.

The control signal (A) may then be chosen in accordance with the classification, thereby controlling a display (10a). For example, the machine learning system (60) may be configured to detect different types of tissue in the sensed image, e.g., by classifying the tissue displayed in the image into either malignant or benign tissue. This may be done by means of a semantic segmentation of the input image (x) by the machine learning system (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the machine learning system (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

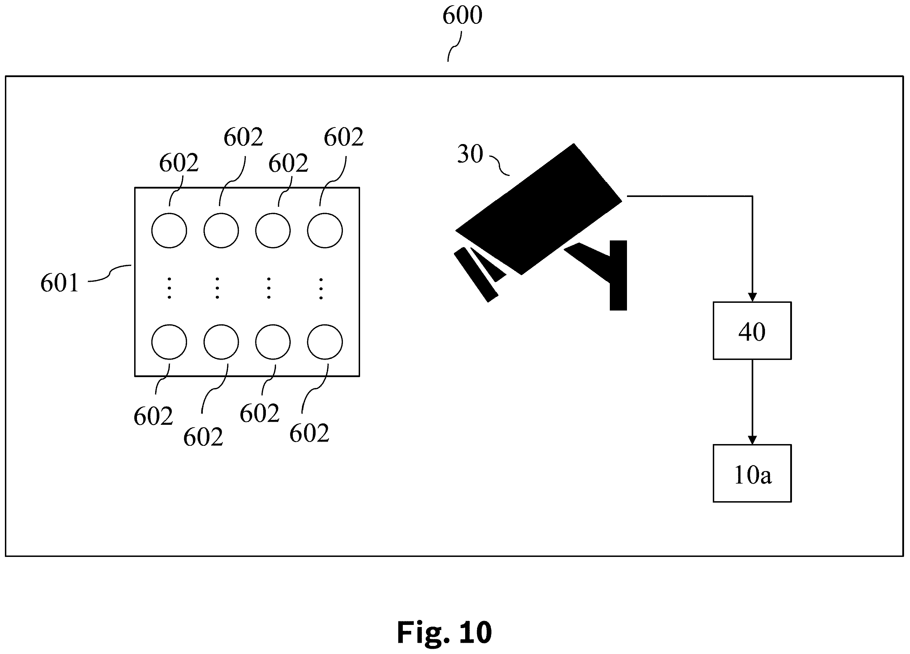

Figure 10 shows an embodiment of a medical analysis system (600) being controlled by the control system (40). The medical analysis system (600) is supplied with a microarray (601), wherein the microarray comprises a plurality of spots (602, also known as features) which have been exposed to a medical specimen. The medical specimen may, for example, be a human specimen or an animal specimen, e.g., obtained from a swab.

The microarray (601) may be a DNA microarray or a protein microarray.

The sensor (30) is configured to sense the microarray (601). The sensor (30) is preferably an optical sensor such as a video sensor. The machine learning system (60) may hence be understood as an image classifier.

The machine learning system (60) is configured to classify a result of the specimen based on an input image (x) of the microarray supplied by the sensor (30). In particular, the machine learning system (60) may be configured to determine whether the microarray (601) indicates the presence of a virus in the specimen.

The control signal (A) may then be chosen such that the display (10a) shows the result of the classification.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

## Claims

1. Computer-implemented method for determining an output signal (y) characterizing a classification and/or regression result and/or density value of an input signal (x) or characterizing an action to be performed by a technical system (100, 200, 250, 300, 400) based on the input signal (x), wherein the output signal (y) is determined by providing the input signal (x) to a machine learning system (60), preferably a neural network, wherein a value of at least one parameter ($v_1$, $v_2$, $v_n$) of the machine learning system (60) is transformed by a reparameterization function (rf) before using the parameter in the machine learning system (60), wherein the reparameterization function (rf) is **characterized by** being bound from below and above and by having a largest gradient at zero.

2. Computer-implemented method for training a machine learning system (60), preferably a neural network, based on training input signals ($x_i$), wherein during training a value of at least one parameter ($v_1$, $v_2$, $v_n$) of the machine learning system (60) is transformed by a reparameterization function (rf) before using the parameter in the machine learning system (60), wherein the reparameterization function (rf) is **characterized by** being bound from below and above and by having a largest gradient at zero.

3. Method according to claim 2, wherein after training the value of the at least one parameter ($v_1$, $v_2$, $v_n$) is set to a value that is obtained when processing the value of the parameter with the reparameterization function (rf).

4. Method according to anyone of the claims 1 to 3, wherein the reparameterization function (rf) is a sigmoidal function.

5. Method according to claim 4, wherein the reparameterization function (rf) is **characterized by** the formula

$$w = a \cdot \mathrm{rf}\left(\frac{v}{b}\right),$$

wherein $v$ is the value of the parameter before reparameterization, w is the value of the parameter after reparameterization, rf is the reparameterization function, and $a$ and $b$ are hyperparameters of the machine learning system (60) or parameters that can be adapted during training of the machine learning system (60).

6. Method according to claim previous, wherein values of a plurality of parameters ($v_1$, $v_2$, $v_n$) of the machine learning system (60) are transformed by the reparameterization function (rf) before using the parameters, wherein each parameter of the plurality of parameters uses the same values $a$ and $b$ as hyperparameters or as trainable parameters.

7. Method according to anyone of the claims 1 to 6, wherein the input signal (x) is a sensor signal obtained by a sensor (30), e.g., a camera, a lidar, a radar, an ultrasonic sensor, a thermal sensor, a microphone, a piezo sensor, or a hall sensor.

8. Method according to any one of the claims 1 or 4 to 7 when depending on claim 1, wherein an actuator (10) or a display (10a) is controlled based on the output signal (y).

9. Training system (140), which is configured to carry out the training method according to any one of the claims 2 or 3 to 8 when depending on claim 2.

10. Computer program that is configured to cause a computer to carry out the method according to any one of the claims 1 to 8 with all of its steps if the computer program is carried out by a processor (45, 145).

11. Machine-readable storage medium (46, 146) on which the computer program according to claim 10 is stored.

**Fig. 1**

**Fig. 2**

**Fig. 3**

**Fig. 4**

**Fig. 5**

30

40

250

249

**Fig. 6**

**Fig. 7**

**Fig. 8**

**Fig. 9**

**Fig. 10**

Europäisches
Patentamt
European
Patent Office
Office européen
des brevets

# EUROPEAN SEARCH REPORT

**Application Number**

EP 22 19 6961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAY ARITRA ET AL: "Study of Overfitting through Activation Functions as a Hyper-parameter for Image Clothing Classification using Neural Network", 2021 12TH INTERNATIONAL CONFERENCE ON COMPUTING COMMUNICATION AND NETWORKING TECHNOLOGIES (ICCCNT), IEEE, 6 July 2021 (2021-07-06), pages 1-5, XP034010541, DOI: 10.1109/ICCCNT51525.2021.9580022 [retrieved on 2021-10-18] | 1-6,9-11 | INV. G06N3/02 |
| Y | * abstract * * Section III.C a); page second; figure 1 * | 7,8 | |
| Y | US 2021/097691 A1 (LIU MING-YU [US]) 1 April 2021 (2021-04-01) * page 2, paragraph 0049 * * page 6, paragraph 0076 * | 7,8 | |
| A | US 2022/294751 A1 (SLOBODYANUK YURY G [RU] ET AL) 15 September 2022 (2022-09-15) * page 5, paragraph 0103 – paragraph 0104 * | 1-11 | TECHNICAL FIELDS SEARCHED (IPC) G06N |

The present search report has been drawn up for all claims

| Place of search | Date of completion of the search | Examiner |
|---|---|---|
| The Hague | 17 March 2023 | Fonseca dos Santos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 6961

This annex lists the patent family members relating to the patent documents cited in  the above-mentioned European search report.
The members are as contained in the European Patent Office EDP file on
The European Patent Office is in no way liable for these particulars which are merely given for the purpose of information.

17-03-2023

| Patent document cited in search report | | Publication date | Patent family member(s) | | Publication date |
|---|---|---|---|---|---|
| US 2021097691 | A1 | 01-04-2021 | CN | 114365185 A | 15-04-2022 |
| | | | DE | 112020004702 T5 | 21-07-2022 |
| | | | GB | 2600073 A | 20-04-2022 |
| | | | US | 2021097691 A1 | 01-04-2021 |
| | | | WO | 2021067126 A1 | 08-04-2021 |
| US 2022294751 | A1 | 15-09-2022 | RU | 2769633 C1 | 04-04-2022 |
| | | | US | 2022294751 A1 | 15-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SALIMANS ; KINGMA.** *Weight Normalization: A Simple Reparameterization to Accelerate Training of Deep Neural Networks,* 2016, https://arxiv.org/pdf/1602.07868.pdf

- **SCHWARZ et al.** *Powerpropagation: A sparsity inducing weight reparameterization,* 2021, https://arxiv.org/pdf/2110.00296.pdf